# EUROPÄISCHE PATENTSCHRIFT

(11) **EP 3 864 294 B1**
(45) Veröffentlichungstag und Bekanntmachung des Hinweises auf die Patenterteilung: **27.09.2023**
(21) Anmeldenummer: 19786477.0
(22) Anmeldetag: 27.09.2019
(51) Int. Cl.: F04D 5/00, F02M 37/04, F04D 29/16, F04D 29/42, F02M 25/022, F02M 25/025

(54) **FLUIDPUMPE, WASSERFÖRDEREINHEIT, WASSEREINSPRITZSYSTEM, VERBRENNUNGSMOTOR UND FAHRZEUG**
FLUID PUMP, WATER DELIVERY UNIT, WATER INJECTION SYSTEM, INTERNAL COMBUSTION ENGINE AND VEHICLE
POMPE À FLUIDE, UNITÉ DE REFOULEMENT D'EAU, SYSTÈME D'INJECTION D'EAU, MOTEUR À COMBUSTION INTERNE ET VÉHICULE

(30) Priorität: 08.10.2018 DE 102018217180
(43) Veröffentlichungstag der Anmeldung: 18.08.2021
(73) Patentinhaber: Vitesco Technologies GmbH, 93055 Regensburg (DE)
(72) Erfinder: FISCHER, Matthias, 81737 München (DE); LEYGRAF, Rene, 81737 München (DE); BECKER, Dirk, 81737 München (DE); GOETZE, Wolf, 81737 München (DE)
(74) Vertreter: Vitesco Technologies
(86) Internationale Anmeldenummer: PCT/EP2019/076226
(87) Internationale Veröffentlichungsnummer: WO 2020/074275

(56) Entgegenhaltungen:
- EP-A1- 2 918 839
- DE-C- 804 394
- DE-U1- 9 316 138
- GB-A- 785 488

## Beschreibung

Die Erfindung betrifft eine Fluidpumpe zur Förderung eines flüssigen Fluids. Die Erfindung betrifft ferner eine Wasserfördereinheit mit einer solchen Fluidpumpe und ein Wassereinspritzsystem mit einer solchen Wasserfördereinheit. Die Erfindung betrifft ferner einen Verbrennungsmotor, der mit einem solchen Wassereinspritzsystem betrieben wird, sowie ein Fahrzeug mit einem solchen Verbrennungsmotor.

Unter einem Fahrzeug ist dabei jede Art von Fahrzeug zu verstehen, welches zum Betrieb mit einem flüssigen Kraftstoff versorgt werden muss, insbesondere aber Personenkraftwagen und/oder Nutzfahrzeuge. Ferner kann es sich beim Fahrzeug auch um ein teilelektrisches Fahrzeug handeln, insbesondere aber um Personenkraftwagen und/oder Nutzfahrzeuge.

Aus dem Stand der Technik ist die Verwendung von Wasser im Sinne eines Additivs zur Einspritzung in einen Verbrennungsmotor bekannt. Die Wassereinspritzung dient dabei der Verbrauchsreduktion sowie der Leistungssteigerung des Verbrennungsmotors.

Bei der Wassereinspritzung geht es darum, die Verbrennungsluft weiter herunter zu kühlen, als das mit einem Ladeluftkühler eines aufgeladenen Verbrennungsmotors gelingt. Dabei wird vor allem bei hohen Drehzahlen ein Wassersprühnebel - z.B. in den Sammler eines Saugmoduls - eingespritzt, welcher infolge seiner Verdunstung die Verbrennungsluft herunterkühlt, bevor sie in einen Zylinder strömt. Insbesondere in den heutigen Zeiten des "Downsizings" ist das sinnvoller denn je.

Aus den beiden Druckschriften WO 2012/045 452 und EP 2 789 839 A2 ist je ein Betriebs-verfahren einer Verbrennungskraftmaschine bekannt, bei dem Wasser in einen Brennraum eingespritzt wird. Die Druckschrift EP 2 918 839 A1 offenbart eine Elektrische Pumpe mit einem Elektromotor.

Die Druckschrift GB 785 488 A offenbart eine hermetisch abgedichtete Motor-Pumpen-Einheit mit einem Elektromotor.

Die Druckschrift DE 804 394 C offenbart eine Labyrinthspaltdichtung.

Eine der Erfindung zugrunde liegende Aufgabe ist es, eine Langzeitdichtheit einer zu diesem Zweck verwendeten Wasserpumpe sicherzustellen.

Diese Aufgabe wird durch eine gemäß Anspruch 1 unter Schutz gestellte Fluidpumpe gelöst. Es wird ferner eine Verwendung einer solchen Fluidpumpe als Wasserpumpe einer Wasserfördereinheit vorgeschlagen und unter Schutz gestellt (vgl. Anspruch 6). Des Weiteren werden eine Wasserfördereinheit, ein Wassereinspritzsystem, ein Verbrennungsmotor sowie ein Fahrzeug vorgeschlagen und unter Schutz gestellt (vgl. Ansprüche 7 bis 10). Vorteilhafte Ausführungsformen der Erfindung sind Gegenstand der Unteransprüche.

Durch die vorgeschlagene fluidische Verbindung lässt sich ein auf die Dichtung wirkender fluidischer Druck signifikant minimieren. Dies wiederum begünstigt eine Langzeitdichtheit der Pumpenstufe gegenüber dem Elektromotor. Die Langzeitdichtheit wiederum schützt den Elektromotor vor Korrosion.

Unter einem flüssigen Fluid ist dabei in erster Linie Wasser zu verstehen. Grundsätzlich aber eignet sich die vorgeschlagene Fluidpumpe auch zur Förderung einer Harnstoff-Wasser-Lösung zur Verwendung in einem Abgasreinigungssystem (Abgasreinigungsverfahren → SCR-Verfahren; SCR = Selective Catalytic Reduction). Eine solche Harnstoff-Wasser-Lösung ist unter dem Handelsnamen AdBlue^{®} erhältlich. Dabei kann es sich z.B. um eine 32,5%ige Harnstoff-Wasser-Lösung handeln, die als solche bei ca. -11°C einfriert.

Zur Umsetzung der fluidischen Verbindung ist in einer Mitnehmerverbindung zwischen dem Wellenende und dem Pumpenlaufrad zumindest eine Freimachung im Wellenende und/oder im Pumpenlaufrad vorgesehen, welche sowohl mit der Dichtung als auch mit dem Einlass fluidisch verbunden ist/sind. Die Freimachung/Freimachungen verbindet/verbinden den dichtungsnahen Bereich mit einem Bereich um das Wellenende fluidisch und bildet/bilden ein erstes bzw. erste Druckentlastungsmittel.

Im Sinne der vorliegenden Offenbarung ist unter einer Freimachung eine lokale, nutähnlich verlaufende Aussparung bzw. Ausnehmung im Wellenende und/oder im Pumpenlaufrad zu verstehen, welche aufgrund ihrer Dimensionierung einen hinreichenden Fluidfluss in der Mitnehmerverbindung sicherstellt, um den besagten Druckabbau zu ermöglichen. Zusätzlich oder alternativ dazu lässt sich die Mitnehmerverbindung auch mit einem entsprechenden Spiel versehen, um eine solch druckmindernde Wirkung zu erzielen. Insofern ist im Sinne der vorliegenden Offenbarung unter einer Freimachung auch eine Mitnehmerverbindung zu verstehen, die als solche keine Aussparung bzw. Ausnehmung der zuvor beschriebenen Art umfasst, sondern lediglich entsprechend spielbehaftet ausgebildet ist.

Bei der Mitnehmerverbindung kann es sich z.B. um eine Mitnehmerverbindung handeln, bei der das Wellenende eine Querschnittsausbildung mit zwei zueinander planparallelen Flächen umfasst, wobei das Wellenende durch eine entsprechend komplementär ausgebildete Durchgangsöffnung des Laufrades geführt ist. Alternative Querschnittsausbildungen hierzu sind dem Fachmann bekannt und werden daher an dieser Stelle nicht beschrieben.

Zur Umsetzung der fluidischen Verbindung ist ferner in einem Bereich der Mitnehmerverbindung zumindest ein erstes Druckentlastungsdurchgangsloch im Pumpenlaufrad vorgesehen, welches sowohl mit der Dichtung als auch mit dem Einlass fluidisch verbunden ist, wobei das erste Druckentlastungsdurchgangsloch ein zweites Druckentlastungsmittel bildet. Auch dieses erste Druckentlastungsdurchgangsloch verbindet den dichtungsnahen Bereich mit dem Bereich um das Wellenende fluidisch.

In einem Bereich eines den Einlass der Fluidpumpe bildenden Gehäuseabschnitts ist zumindest ein zweites Druckentlastungsdurchgangsloch ausgebildet, welches die Dichtung mit dem Einlass fluidisch verbindet, wobei das zweite Druckentlastungsdurchgangsloch ein drittes Druckentlastungsmittel bildet.

In einem Gehäuseabschnitt der Fluidpumpe, angrenzend zur Pumpenstufe, ist eine Aufnahme vorgesehen, in welcher mindestens ein elastisch stauchbares Ausgleichselement zur Aufnahme einer sich in der Pumpenstufe einstellenden, vereisungsbedingten Ausdehnung des Fluids - damit ist der Eisgang des Fluids gemeint - angeordnet ist, wobei die Aufnahme einerseits mit dem Wellenende und andererseits mit der Dichtung über das erste und/oder zweite Druckentlastungsmittel sowie mit dem Einlass über das dritte Druckentlastungsmittel fluidisch verbunden ist. Der Gehäuseabschnitt kann dabei einstückig mit der Pumpenstufe ausgebildet sein.

Es wird ferner vorgeschlagen, dass die Pumpenstufe ein Pumpenstufengehäuse mit einem Deckel aufweist, wobei ein Pumpenstufengehäuseteil und der Deckel eine Aufnahme des Pumpenlaufrades bilden, wobei der das Ausgleichselement aufnehmende Gehäuseabschnitt einstückig mit dem Pumpenstufengehäuseteil ausgebildet ist. Dabei sind ferner ein Einlass der Fluidpumpe am Pumpenstufengehäuseteil und ein Auslass der der Fluidpumpe am Deckel ausgebildet.

Das Pumpenlaufrad kann in Gestalt eines Seitenkanalpumpenlaufrades und/oder eines Peripheralkanalpumpenlaufrades ausgebildet sein.

Zur Kosten-und Gewichtseinsparung kann die Pumpenstufe vorteilhafterweise zumindest ein aus einem Kunststoff gespritztes Element aufweisen.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:

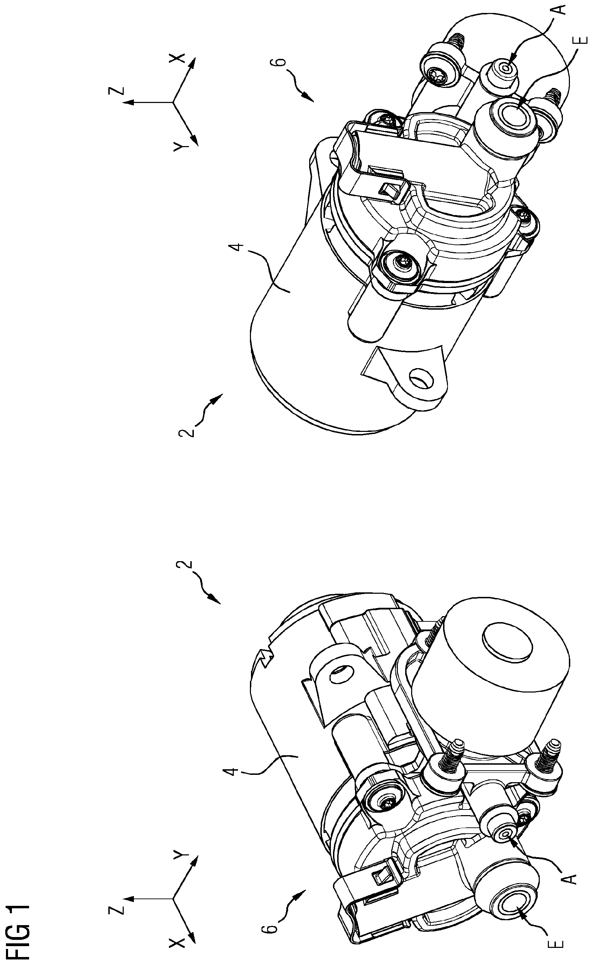

- Fig. 1: eine vorgeschlagene Wasserpumpe in einer ersten und zweiten perspektivischen Darstellung und
- Fig. 2: die in Fig. 1 gezeigte Wasserpumpe in einer Schnittdarstellung.

Die Wasserpumpe 2 ist Teil einer Wasserfördereinheit zur Verwendung in einem Wassereinspritzsystem, welches wiederum zur Einspritzung von Wasser - das kann z.B. destilliertes und/oder demineralisiertes Wasser oder auch nur Wasser sein - in einen Verbrennungsmotor eines Fahrzeugs vorgesehen ist. Die Wasserfördereinheit ist dabei an einem Wassertank angeordnet, der als solcher je nach Konstruktion des Fahrzeugs an verschiedenen Stellen untergebracht sein kann, etwa in einer Reserverad-Mulde eines Kofferraums.

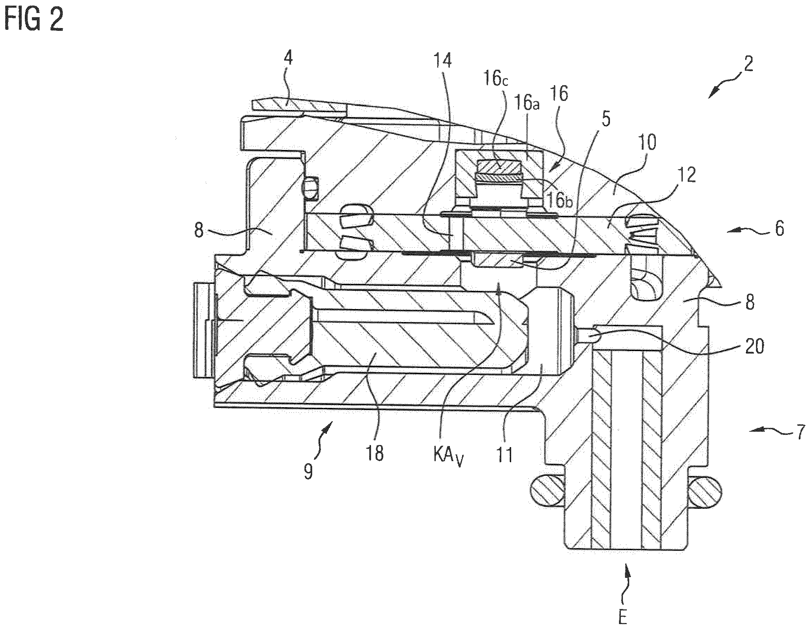

Die Wasserpumpe 2 umfasst einen als Trockenläufer und Innenläufer ausgebildeten Elektromotor 4 sowie eine durch diesen Elektromotor 4 angetriebene Pumpenstufe 6 in Gestalt einer Strömungspumpenstufe, welche ein Pumpenlaufrad 12 in Gestalt eines Seitenkanalpumpenlaufrades umfasst. Grundsätzlich kann aber das Pumpenlaufrad 12 in Gestalt eines Seitenkanalpumpenlaufrades und/oder eines Peripheralkanalpumpenlaufrades ausgebildet sein. Ein einen Rotor umschließender Stator des Elektromotors 4 ist dabei mit der Pumpenstufe 6 formschlüssig gefügt (vgl. Fig. 2) .

Die Pumpenstufe 6 ist in einem Bereich eines pumpenseitigen, sich in die Pumpenstufe 6 bis durch das Pumpenlaufrad 12 erstreckenden Wellenendes 5 des Rotors mittels einer z.B. dreiteiligen Dichtung 16 gegenüber dem Elektromotor 4 abgedichtet. Die Dichtung 16 umfasst dabei eine geschlossen umlaufende Dichtschale 16a, in welcher eine geschlossen umlaufende Dichtscheibe 16b und ein Stützelement 16c angeordnet sind. Die Dichtung 16 ist dabei in einen Pumpendeckel bzw. Deckel 10 eingepresst, durch den sich das Wellenende 5 in die Pumpenstufe 6 erstreckt. Die Dichtung 16 wirkt dabei gegenüber dem Deckel 10 statisch und gegenüber dem Wellenende 5 dynamisch dichtend.

Alternativ zu einer solch vorgeschlagenen, mehrteiligen Dichtung 16 können grundsätzlich auch sogenannte Rundschnurringe verwendet werden, etwa auch als Bestandteil einer zwei- oder mehrteiligen Dichtung. Solche Rundschnurringe sind im Gegensatz zu Elastomer-O-Ringen aus einer Rundschnur gefertigte und stoßgeklebte bzw. stoßvulkanisierte Dichtringe. Die Rundschnur kann dabei extrudiert sein. Dadurch ergibt sich zwangsläufig eine Stoßstelle am Umfang, an welcher die Enden der Rundschnur verklebt bzw. vulkanisiert werden.

Die Dichtung 16 ist mit einem Einlass E der Wasserpumpe 2 bzw. der Pumpenstufe 6 fluidisch verbunden, um einen fluidischen Druckabbau in einem dichtungsnahen Bereich zu ermöglichen und die Dichtung 16 dadurch zu entlasten. Diese fluidische Verbindung ist dabei wie folgt umgesetzt. In einer Mitnehmerverbindung zwischen dem Wellenende 5 und dem Pumpenlaufrad 12 ist ein erstes Druckentlastungsmittel in Gestalt einer Freimachung vorgesehen. Die Freimachung kann dabei im Wellenende 5 und/oder im Pumpenlaufrad 12 ausgebildet sein. Die Freimachung erstreckt sich dabei zumindest zwischen dem der Dichtung 16 zugewandten und dem der Dichtung 16 abgewandten Ende des Pumpenlaufrades, so dass sie den dichtungsnahen Bereich mit einem Bereich um das Wellenende 5 fluidisch verbindet. Oder anders formuliert, die Freimachung erstreckt sich zumindest zwischen einer der Dichtung 16 zugewandten und einer der Dichtung 16 abgewandten Stirnseite des Pumpenlaufrades, so dass sie den dichtungsnahen Bereich mit einem Bereich um das Wellenende 5 fluidisch verbindet.

Zusätzlich oder alternativ dazu kann im Pumpenlaufrad 12 in einem Bereich der Mitnehmerverbindung zumindest ein erstes Druckentlastungsdurchgangsloch 14 vorgesehen sein, welches sich zwischen dem der Dichtung 16 zugewandten und dem der Dichtung 16 abgewandten Ende des Pumpenlaufrades 12 erstreckt und im Sinne eines zweiten Druckentlastungsmittels wirkt. Auch dieses erste Druckentlastungsdurchgangsloch 14 verbindet den dichtungsnahen Bereich mit dem Bereich um das Wellenende 5 fluidisch. Oder anders formuliert, das erste Druckentlastungsdurchgangsloch 14 erstreckt sich zwischen einer der Dichtung 16 zugewandten und einer der Dichtung 16 abgewandten Stirnseite des Pumpenlaufrades, so dass es den dichtungsnahen Bereich mit einem Bereich um das Wellenende 5 fluidisch verbindet.

Angrenzend an die Pumpenstufe 6 einerseits und zwischen der Pumpenstufe 6 und einem den Einlass E bildenden Gehäuseabschnitt 7 eines Pumpenstufengehäuseteils 8 andererseits angeordnet ist ein - bspw. einstückig mit dem Pumpenstufengehäuseteil 8 ausgebildeter bzw. an diesem angeformter - Gehäuseabschnitt 9 mit einer Aufnahme 11 vorgesehen, in welcher ein elastisch stauchbares Ausgleichselement 18 in Gestalt eines Röhrchens angeordnet ist. Diese Aufnahme 11 und das darin angeordnete Röhrchen 18 sind dabei mit dem Wellenende 5 über einen Kanalabschnitt KA_{V} fluidisch verbunden. Dadurch kann das Röhrchen 18 im Sinne eines Ausgleichselements wirken und eine vereisungsbedingte Ausdehnung des Wassers - damit ist der Eisgang des Wassers gemeint - zwischen dem Röhrchen 18 und dem Wellenende 5 elastisch und gänzlich reversibel aufnehmen.

Das Röhrchen 18 ist dabei z.B. als formstabiles Gummielement ausgebildet, welches zur Umgebung der Wasserpumpe hin offen ist bzw. in fluidisch-gasförmiger Wechselwirkung zur Umgebung der Wasserpumpe 2 steht. Außerhalb eines Betriebes der Wasserpumpe 2 stellt dieses Röhrchen 18 sicher, dass der Eisgang des Wassers nicht gegen das Wellenende 5 drückt und dadurch die Welle verschiebt.

Des Weiteren ist im Bereich des Gehäuseabschnitts 7 ein zweites Druckentlastungsdurchgangsloch 20 im Sinne eines dritten Druckentlastungsmittels ausgebildet, welches die Aufnahme 11 mit dem Einlass E fluidisch verbindet.

Somit ergibt sich eine fluidische Verbindung zwischen der Dichtung 16 bzw. dem dichtungsnahen Bereich und dem Einlass E, über welche ein auf die Dichtung 16 wirkender Druck signifikant minimiert wird, um die Dichtung 16 zu entlasten. Bei einem in der Pumpenstufe 6 auslassseitig wirkenden Förderdruck von ca. 8 bar bis 12 bar, vorzugsweise ca. 10 bar, stellt sich ohne eine solch vorgeschlagene Fluidverbindung im Ergebnis ein auf die Dichtung 16 wirkender Wasserdruck von 4 bis 7 bar ein. Je nach Auslegung der einzelnen Entlastungsmittel kann dieser Wasserdruck vorteilhafterweise auf den Druck im Einlass E reduziert werden. Der auf die Dichtung 16 wirkende Wasserdruck kann dabei z.B. zwischen ca. 0 bar und ca. Umgebungsdruck (ca. 1 bar) liegen.

Die Strömungspumpenstufe 6 weist ein Pumpenstufengehäuse mit einem Deckel 10 auf. Das Pumpenstufengehäuseteil 8 ist dabei mit dem Deckel 10 gefügt, wobei das Pumpenstufengehäuseteil 8 und der Deckel 10 eine Aufnahme des Pumpenlaufrades 12 bilden. Der Gehäuseabschnitt 9 ist dabei - wie bereits zuvor beschrieben - einstückig mit dem Pumpenstufengehäuseteil 8 ausgebildet bzw. an diesem angeformt. Auch ist ein Einlass E der Wasserpumpe 2 bzw. der Pumpenstufe 6 am Pumpenstufengehäuseteil 8 angeformt, wohingegen ein Auslass A der Wasserpumpe 2 bzw. der Pumpenstufe 6 am Deckel 10 angeformt ist.

Aus Fertigungsgründen wird ferner vorgeschlagen, das Pumpenstufengehäuseteil 8, den Deckel 10 sowie das Pumpenlaufrad 12 jeweils als ein gespritztes Kunststoffelement auszubilden. Dadurch werden Kosten und Gewicht eingespart.

Obwohl in der vorhergehenden Beschreibung exemplarische Ausführungen erläutert werden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

## Patentansprüche

1. Fluidpumpe (2) zur Förderung eines flüssigen Fluids, umfassend:
einen Elektromotor (4) und
eine durch den Elektromotor (4) angetriebene, ein Pumpenlaufrad (12) aufweisende Pumpenstufe (6),
wobei der Elektromotor (4) als Trockenläufer ausgebildet ist,
wobei die Pumpenstufe (6) in einem Bereich eines pumpenseitigen, sich in die Pumpenstufe (6) bis durch das Pumpenlaufrad (12) erstreckenden Wellenendes (5) eines Rotors des Elektromotors (4) mittels einer Dichtung (16) gegenüber dem Elektromotor (4) abgedichtet ist und
wobei zum fluidischen Druckabbau in einem dichtungsnahen Bereich zwischen der Dichtung (16) und einem Einlass (E) der Fluidpumpe (2) eine fluidische Verbindung vorgesehen ist, welche die Dichtung (16) entlastet, **dadurch gekennzeichnet, dass** in einer Mitnehmerverbindung zwischen dem Wellenende (5) und dem Pumpenlaufrad (12) zumindest eine Freimachung im Wellenende (5) und/oder im Pumpenlaufrad (12) vorgesehen ist, welche sowohl mit der Dichtung (16) als auch mit dem Einlass (E) fluidisch verbunden ist,
wobei die Freimachung ein erstes Druckentlastungsmittel bildet,
wobei in einem Bereich der Mitnehmerverbindung zumindest ein erstes Druckentlastungsdurchgangsloch (14) im Pumpenlaufrad (12) vorgesehen ist, welches sowohl mit der Dichtung (16) als auch mit dem Einlass (E) fluidisch verbunden ist, wobei das erste Druckentlastungsdurchgangsloch (14) ein zweites Druckentlastungsmittel bildet,
wobei in einem Bereich eines den Einlass (E) der Fluidpumpe (2) bildenden Gehäuseabschnitts (7) zumindest ein zweites Druckentlastungsdurchgangsloch (20) ausgebildet ist, welches die Dichtung (16) mit dem Einlass (E) fluidisch verbindet, wobei das zweite Druckentlastungsdurchgangsloch (20) ein drittes Druckentlastungsmittel bildet,
wobei in einem Gehäuseabschnitt (9) der Fluidpumpe (2), angrenzend zur Pumpenstufe (6), eine Aufnahme (11) vorgesehen ist, in welcher mindestens ein elastisch stauchbares Ausgleichselement (18) zur Aufnahme einer sich in der Pumpenstufe (6) einstellenden, vereisungsbedingten Ausdehnung des Fluids angeordnet ist, wobei die Aufnahme (11) einerseits mit dem Wellenende (5) und andererseits mit der Dichtung (16) über das erste und/oder zweite Druckentlastungsmittel sowie mit dem Einlass (E) über das dritte Druckentlastungsmittel (20) fluidisch verbunden ist.

2. Fluidpumpe (2) nach Anspruch 1, **dadurch gekennzeichnet, dass** der Gehäuseabschnitt (9) einstückig mit der Pumpenstufe (6) ausgebildet ist.

3. Fluidpumpe (2) nach Anspruch 2, **dadurch gekennzeichnet, dass** die Pumpenstufe (6) ein Pumpenstufengehäuse mit einem Deckel (10) aufweist, wobei ein Pumpenstufengehäuseteil (8) und der Deckel (10) eine Aufnahme des Pumpenlaufrades (12) bilden, wobei der Gehäuseabschnitt (9) einstückig mit dem Pumpenstufengehäuseteil (8) ausgebildet ist, wobei der Einlass (E) am Pumpenstufengehäuseteil (8) und ein Auslass (A) der Pumpenstufe (6) am Deckel (10) ausgebildet sind.

4. Fluidpumpe (2) nach einem der Ansprüche 1 bis 3, **dadurch gekennzeichnet, dass** das Pumpenlaufrad (12) in Gestalt eines Seitenkanalpumpenlaufrades und/oder eines Peripheralkanalpumpenlaufrades ausgebildet ist.

5. Fluidpumpe (2) nach einem der Ansprüche 1 bis 4, **dadurch gekennzeichnet, dass** die Pumpenstufe (6) zumindest ein aus einem Kunststoff gespritztes Element (8, 10, 12) aufweist.

6. Verwendung einer Fluidpumpe (2) nach einem der Ansprüche 1 bis 5 als Wasserpumpe einer Wasserfördereinheit.

7. Wasserfördereinheit zur Verwendung in einem Wassereinspritzsystem zur Einspritzung von Wasser in einen Verbrennungsmotor, wobei die Wasserfördereinheit eine Fluidpumpe (2) nach einem der Ansprüche 1 bis 5 aufweist.

8. Wassereinspritzsystem zur Einspritzung von Wasser in einen Verbrennungsmotor, wobei das Wassereinspritzsystem eine Wasserfördereinheit nach Anspruch 7 aufweist.

9. Verbrennungsmotor mit einem Wassereinspritzsystem nach Anspruch 8.

10. Fahrzeug mit einem Verbrennungsmotor nach Anspruch 9.

## Claims

1. Fluid pump (2) for delivering a liquid fluid, comprising:
an electric motor (4) and
a pump stage (6) driven by the electric motor (4) and having a pump impeller (12),
wherein the electric motor (4) is designed to run dry,
wherein the pump stage (6) is sealed off with respect to the electric motor (4) by means of a seal (16) in a region of a pump-side shaft end (5) of a rotor of the electric motor (4) that extends in the pump stage (6) until through the pump impeller (12), and
wherein a fluidic connection which relieves the load on the seal (16) is provided to dissipate the fluidic pressure in a region close to the seal between the seal (16) and an inlet (E) of the fluid pump (2), **characterized in that** at least one clearance which is fluidically connected both to the seal (16) and to the inlet (E) is provided in the shaft end (5) and/or in the pump impeller (12) in a driver connection between the shaft end (5) and the pump impeller (12), the clearance forming a first pressure relief means,
wherein at least one pressure relief through hole (14) which is fluidically connected both to the seal (16) and to the inlet (E) is provided in the pump impeller (12) in a region of the driver connection,
wherein the first pressure relief through hole (14) forms a second pressure relief means,
wherein at least one second pressure relief through hole (20) which fluidically connects the seal (16) to the inlet (E) is formed in a region of a housing section (7) forming the inlet (E) of the fluid pump (2),
wherein the second pressure relief through hole (20) forms a third pressure relief means,
wherein a receptacle (11) in which at least one elastically compressible compensating element (18) is arranged to accommodate icing-induced expansion of the fluid that occurs in the pump stage (6) is provided in a housing section (9) of the fluid pump (2), adjacent to the pump stage (6),
wherein the receptacle (11) is fluidically connected on one side to the shaft end (5) and on the other side to the seal (16) via the first and/or second pressure relief means and also to the inlet (E) via the third pressure relief means (20).

2. Fluid pump (2) according to Claim 1, **characterized in that** the housing section (9) is formed in one piece with the pump stage (6).

3. Fluid pump (2) according to Claim 2, **characterized in that** the pump stage (6) has a pump stage housing with a cover (10), wherein a pump stage housing part (8) and the cover (10) form a receptacle of the pump impeller (12), wherein the housing section (9) is formed in one piece with the pump stage housing part (8), wherein the inlet (E) is formed on the pump stage housing part (8) and an outlet (A) of the pump stage (6) is formed on the cover (10).

4. Fluid pump (2) according to one of Claims 1 to 3, **characterized in that** the pump impeller (12) is formed as a side-channel pump impeller and/or a peripheral-channel pump impeller.

5. Fluid pump (2) according to one of Claims 1 to 4, **characterized in that** the pump stage (6) has at least one element (8, 10, 12) injection moulded from a plastic.

6. Use of a fluid pump (2) according to one of Claims 1 to 5 as a water pump of a water delivery unit.

7. Water delivery unit for use in a water injection system for injecting water into an internal combustion engine, wherein the water delivery unit has a fluid pump (2) according to one of Claims 1 to 5.

8. Water injection system for injecting water into an internal combustion engine, wherein the water injection system has a water delivery unit according to Claim 7.

9. Internal combustion engine having a water injection system according to Claim 8.

10. Vehicle having an internal combustion engine according to Claim 9.

## Revendications

1. Pompe à fluide (2) pour le transport d'un fluide liquide, comprenant :
un moteur électrique (4) et
un étage de pompe (6) entraîné par le moteur électrique (4) et présentant une roue de pompe (12),
le moteur électrique (4) étant conçu sous la forme d'un moteur sec,
l'étage de pompe (6) étant rendu étanche par rapport au moteur électrique (4) au moyen d'un joint d'étanchéité (16) dans une zone d'une extrémité d'arbre (5) d'un rotor du moteur électrique (4), côté pompe, s'étendant dans l'étage de pompe (6) jusqu'à travers la roue de pompe (12), et
une connexion fluidique étant prévue pour la réduction de la pression fluidique dans une zone proche du joint d'étanchéité entre le joint d'étanchéité (16) et une entrée (E) de la pompe à fluide (2), laquelle décharge le joint d'étanchéité (16), **caractérisé, en ce que**, dans une liaison d'entraînement entre l'extrémité d'arbre (5) et la roue de pompe (12), il est prévu au moins un dégagement dans l'extrémité d'arbre (5) et/ou dans la roue de pompe (12), qui est relié fluidiquement aussi bien au joint d'étanchéité (16) qu'à l'entrée (E), le dégagement formant un premier moyen de décharge de pression,
un premier trou traversant (14) de décharge de pression étant prévu dans la roue de pompe (12), dans une zone de la liaison d'entraînement, lequel trou est relié de manière fluidique à la fois au joint d'étanchéité (16) et à l'entrée (E), le premier trou traversant (14) de décharge de pression formant un deuxième moyen de décharge de pression,
au moins un deuxième trou traversant (20) de décharge de pression est formé dans une zone d'une section de boîtier (7) formant l'entrée (E) de la pompe à fluide (2), lequel relie de manière fluidique le joint d'étanchéité (16) à l'entrée (E), le deuxième trou traversant (20) de décharge de pression formant un troisième moyen de décharge de pression,
un logement (11) étant prévu dans une section de boîtier (9) de la pompe à fluide (2), adjacente à l'étage de pompe (6), dans lequel est disposé au moins un élément de compensation (18) élastiquement compressible destiné à absorber une dilatation du fluide se produisant dans l'étage de pompe (6), due au givrage, le logement (11) étant relié fluidiquement d'une part à l'extrémité de l'arbre (5) et d'autre part au joint d'étanchéité (16) par le premier et/ou le deuxième moyen de décharge de pression ainsi qu'à l'entrée (E) par le troisième moyen de décharge de pression (20).

2. Pompe à fluide (2) selon la revendication 1, **caractérisée en ce que** la section de boîtier (9) est formée d'une seule pièce avec l'étage de pompe (6).

3. Pompe à fluide (2) selon la revendication 2, **caractérisée en ce que** l'étage de pompe (6) présente un boîtier d'étage de pompe avec un couvercle (10), une partie de boîtier (8) d'étage de pompe et le couvercle (10) formant un logement de la roue de pompe (12), la section de boîtier (9) étant formée d'une seule pièce avec la partie de boîtier (8) d'étage de pompe, l'entrée (E) étant formée sur la partie de boîtier (8) d'étage de pompe et une sortie (A) de l'étage de pompe (6) étant formée sur le couvercle (10).

4. Pompe à fluide (2) selon l'une des revendications 1 à 3, **caractérisée en ce que** la roue de pompe (12) est réalisée sous la forme d'une roue de pompe à canal latéral et/ou d'une roue de pompe à canal périphérique.

5. Pompe à fluide (2) selon l'une des revendications 1 à 4, **caractérisée en ce que** l'étage de pompe (6) comprend au moins un élément (8, 10, 12) injecté en matière plastique.

6. Utilisation d'une pompe à fluide (2) selon l'une des revendications 1 à 5 en tant que pompe à eau d'une unité d'alimentation en eau.

7. Unité d'alimentation en eau destinée à être utilisée dans un système d'injection d'eau pour injecter de l'eau dans un moteur à combustion interne, l'unité d'alimentation en eau comprenant une pompe à fluide (2) selon l'une quelconque des revendications 1 à 5.

8. Système d'injection d'eau pour injecter de l'eau dans un moteur à combustion interne, le système d'injection d'eau comprenant une unité d'alimentation en eau selon la revendication 7.

9. Moteur à combustion interne équipé d'un système d'injection d'eau selon la revendication 8.

10. Véhicule équipé d'un moteur à combustion interne selon la revendication 9.
